# EUROPÄISCHE PATENTANMELDUNG

(11) **EP 1 110 977 A1**
(43) Veröffentlichungstag der Anmeldung: **27.06.2001**
(21) Anmeldenummer: 00124607.3
(22) Anmeldetag: 10.11.2000
(51) Int. Cl.: C08F 12/04, C08F 10/00, C08F 4/622, C08F 2/32

(54) **Übergangsmetall-katalysierte Polymerisation von olefinischen Monomeren in wasserhaltigem Polymerisationsmedium**

(30) Priorität: 23.12.1999 DE 19962744
(71) Anmelder: BASF AKTIENGESELLSCHAFT, 67056 Ludwigshafen (DE)
(72) Erfinder: Manders, Lambertus, Dr., 67069 Ludwigshafen (DE); Kristen, Marc Oliver, Dr., 67117 Limburgerhof (DE); Haunschild, Alexander, Dr., Nagoya 461-0001 (JP); Geprägs, Michael, Dr., 67245 Lambsheim (DE)

(57) **Zusammenfassung**

Verfahren zur Herstellung von Polymeren, welchen Monomere mit C-C-Doppelbindung und/oder C-C-Dreifachbindung zugrunde liegen, durch Polymerisation dieser Monomeren in Gegenwart eines Katalysatorsystems enthaltend als aktive Bestandteile eine Übergangsmetallverbindung eines frühen Übergangsmetalls und gegebenenfalls eine kationenbildende Verbindung B) und gegebenenfalls weitere Komponenten C)
dadurch gekennzeichnet, daß die Polymerisationsmischung mindestens 30 Gew.-% Wasser enthält.

## Beschreibung

Die vorliegende Erfindung betrifft Verfahren zur Herstellung von Polymeren, welchen Monomere mit C-C-Doppelbindung und/oder C-C-Dreifachbindung zugrunde liegen, durch Polymerisation dieser Monomeren in Gegenwart eines Katalysatorsystems enthaltend als aktive Bestandteile
A) eine Übergangsmetallverbindung eines frühen Übergangsmetalls (M-II) 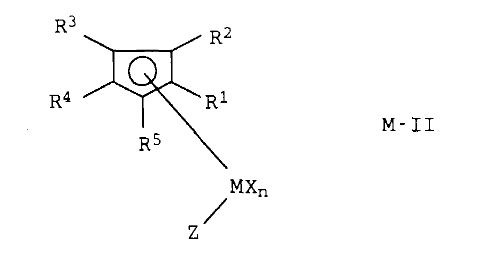 in der die Substituenten folgende Bedeutung haben:
- M: Titan, Zirkonium, Hafnium, Vanadium, Niob oder Tantal, sowie Elemente der III. Nebengruppe des Periodensystems und der Lanthanoiden,
- X: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁶ oder -NR⁶R⁷, N(CH₂CH₂O)₃,
- n: eine ganze Zahl zwischen 1 und 3, wobei n der Wertigkeit von M minus der Zahl 2 entspricht,
wobei
- R⁶ und R⁷: Wasserstoff, C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
- R¹ bis R⁵: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder Si(R⁸)₃ mit
- R⁸: C₁- bis C₁₀-Alkyl, C₃- bis C₁₀-Cycloalkyl oder C₆- bis C₁₅-Aryl,
- Z: für X oder 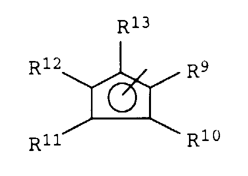 steht,
wobei die Reste
- R⁹ bis R¹³: Wasserstoff, C₁- bis C₁₀-Alkyl, 5- bis 7gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁴)₃ mit
- R¹⁴: C₁- bis C₁₀-Alkyl, C₆- bis C₁₅-Aryl oder C₃- bis C₁₀-Cycloalkyl,
oder wobei die Reste R⁴ und Z gemeinsam eine Gruppierung -R¹⁵-A-bilden, in der
- R¹⁵: 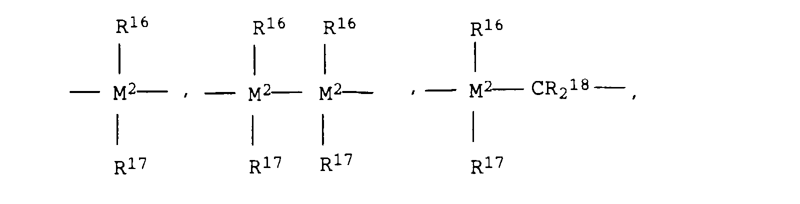 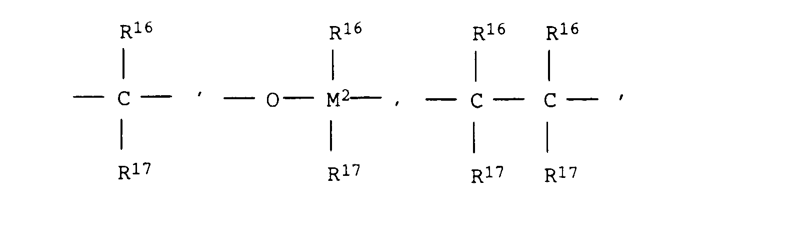 = BR¹⁶, = AlR¹⁶, -Ge-, -Sn-, -O-, -S-, = SO, = SO₂, = NR¹⁶, = CO, = PR¹⁶ oder = P(O)R¹⁶ ist,
wobei
- R¹⁶, R¹⁷ und R¹⁸: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
- M²: Silicium, Germanium oder Zinn ist,
- A: ― O ―, ― S ― , 〉NR¹⁹ oder 〉PR¹⁹ bedeuten, mit
- R¹⁹: C₁- bis C₁₀-Alkyl, C₆- bis C₁₅-Aryl, C₃- bis C₁₀-Cycloalkyl, Alkylaryl oder Si(R²⁰)₃,
- R²⁰: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁴ und R¹² gemeinsam eine Gruppierung -R¹⁵-bilden und gegebenenfalls eine kationenbildende Verbindung B) und gegebenenfalls weitere Komponenten C)
dadurch gekennzeichnet, daß die Polymerisationsmischung mindestens 30 Gew.-% Wasser enthält.

Weiterhin betrifft die vorliegende Erfindung wässrige Dispersionen oder Suspensionen, welchen Monomere mit C-C-Doppelbindung und/oder C-C-Dreifachbindung zugrunde liegen, und Polymere erhältlich aus wässrigen Dispersionen oder Suspensionen durch Entfernung des Wassers aus diesen Dispersionen oder Suspensionen, sowie die Verwendung der wässrigen Suspensionen und/oder Dispersionen.

Die Polymerisation von Olefinen und vinylaromatischen Monomeren mit Metallocenkatalysatoren auf Basis früher Übergangsmetallverbindungen ist bekannt (Angew. Chem. Int. Ed. Engl. 1995, 34, S. 1193).

Die Polymerisationen werden üblicherweise unter Ausschluß von Wasser oder anderen protischen Verbindungen (Verbindungen mit mindestens einer OH-Gruppe) durchgeführt, da diese Metallocenkatalysatorgifte sind.

Abhängig von den Reaktionsbedingungen können niedermolekulare (Dimere, Oligomere, Wachse) oder hochmolekulare Polymere erhalten werden. Ebenfalls abhängig von den Reaktionsbedingungen, fallen diese als Gries, aber auch als mehlartiges Pulver an, welches schlecht handhabbar ist.

Aufgabe der vorliegenden Erfindung war es ein relativ einfaches Polymerisationsverfahren zu finden, welches hochmolekulare Polymere mit gut handhabbarer Kornmorphologie (zum Beispiel gute Rieselfähigkeit, hoher Schüttdichte) oder wasserhaltige Polymerdispersionen liefert.

Demgemäß wurde das eingangs definierte Verfahren, die eingangs definierten Dispersionen oder Suspensionen und die aus ihnen erhältlichen, eingangs definierten Polymere gefunden.

Besonders gut geeignete Übergangsmetallverbindungen A) sind solche mit mindestens einem Cyclopentadienyltyp-Liganden, die gemeinhin als Metallocenkomplexe bezeichnet werden.

Als Komponente A) enthält das Katalysatorsystem mindestens einen oder mehrere Metallocenkomplexe. Als Metallocenkomplexe eignen sich besonders solche der allgemeinen Formel 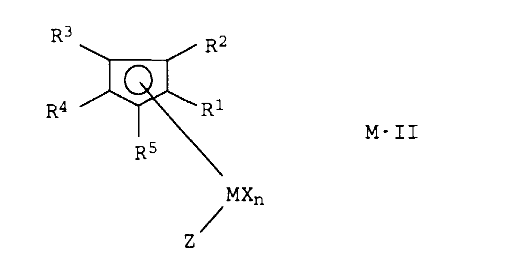 in der die Substituenten folgende Bedeutung haben:
- M: Titan, Zirkonium, Hafnium, Vanadium, Niob oder Tantal, sowie Elemente der III. Nebengruppe des Periodensystems und der Lanthanoiden,
- X: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁶ oder -NR⁶R⁷, N(CH₂CH₂O)₃,
- n: eine ganze Zahl zwischen 1 und 3, wobei n der Wertigkeit von M minus der Zahl 2 entspricht,
wobei
- R⁶ und R⁷: Wasserstoff, C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
- R¹ bis R⁵: Wasserstoff, C₁- bis C₁₀-Alkyl, 5- bis 7gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder Si(R⁸)₃ mit
- R⁸: C₁- bis C₁₀-Alkyl, C₃- bis C₁₀-Cycloalkyl oder C₆- bis C₁₅-Aryl,
- Z: für X oder 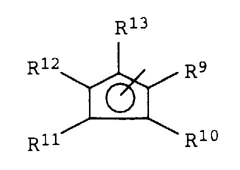 steht,
wobei die Reste
- R⁹ bis R¹³: Wasserstoff, C₁- bis C₁₀-Alkyl, 5- bis 7gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁴)₃ mit
- R¹⁴: C₁- bis C₁₀-Alkyl, C₆- bis C₁₅-Aryl oder C₃- bis C₁₀-Cycloalkyl,
oder wobei die Reste R⁴ und Z gemeinsam eine Gruppierung -R¹⁵-A-bilden, in der
- R¹⁵: 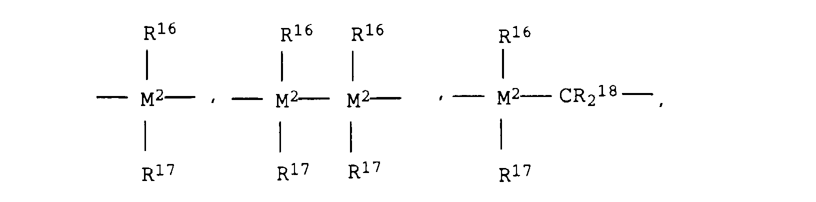 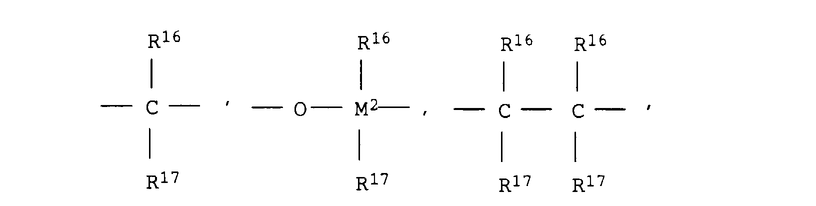 = BR¹⁶, = AlR¹⁶, -Ge-, -Sn-, -O-, -S-, = SO, = SO₂, = NR¹⁶, = CO, = PR¹⁶ oder = P(O)R¹⁶ ist,
wobei
- R¹⁶, R¹⁷ und R¹⁸: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
- M²: Silicium, Germanium oder Zinn ist,
- A: ― O ― , ― S ― , 〉NR¹⁹ oder 〉PR¹⁹ bedeuten, mit
- R¹⁹: C₁- bis C₁₀-Alkyl, C₆- bis C₁₅-Aryl, C₃- bis C₁₀-Cycloalkyl, Alkylaryl oder Si(R²⁰)₃,
- R²⁰: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁴ und R¹² gemeinsam eine Gruppierung -R¹⁵-bilden.

Von den Metallocenkomplexen der allgemeinen Formel M-II sind 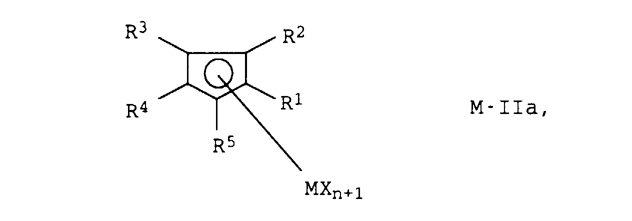 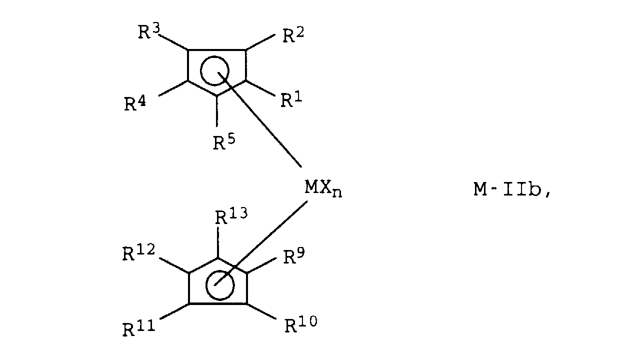 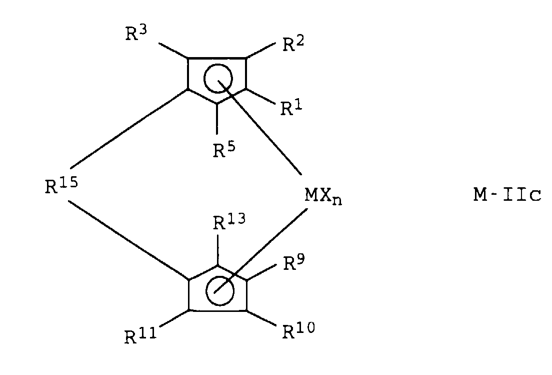 und 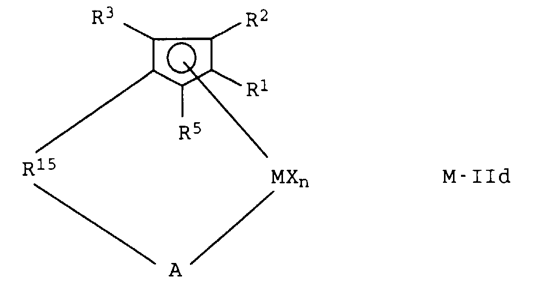 bevorzugt.

Die Reste X können gleich oder verschieden sein, bevorzugt sind sie gleich.

Von den Verbindungen der Formel M-IIa sind insbesondere diejenigen bevorzugt, in denen
- M: Titan, Zirkonium oder Hafnium,
- X: Chlor, C₁-bis C₄-Alkyl, Phenyl, OR⁶,
- n: die Zahl 2 und
- R¹ bis R⁵: Wasserstoff oder C₁- bis C₄-Alkyl bedeuten.
besonders bevorzugt sind Pentamethylcyclopentadienyltitanverbindungen mit drei Alkoxyd-Liganden, wie Methoxy, Ethoxy, tert.-Butoxy oder N(CH₂CH₂O)₃, insbesondere Pentamethylcyclopentadienyltitantrimethoxyd.

Von den Verbindungen der Formel M-IIb sind als bevorzugt diejenigen zu nennen, bei denen
- M: für Titan, Zirkonium oder Hafnium steht,
- X: Chlor, C₁-bis C₄-Alkyl oder Phenyl, OR⁶,
- n: die Zahl 2,
- R¹ bis R⁵: Wasserstoff, C₁- bis C₄-Alkyl oder Si(R⁸)₃,
- R⁹ bis R¹³: Wasserstoff, C₁- bis C₄-Alkyl oder Si(R¹⁴)₃ bedeuten.

Insbesondere sind die Verbindungen der Formel M-IIb geeignet, in denen die Cyclopentadienylreste gleich sind.

Beispiele für besonders geeignete Verbindungen sind u.a.:
Bis(cyclopentadienyl)zirkoniumdichlorid,
Bis(pentamethylcyclopentadienyl)-zirkoniumdichlorid,
Bis(methylcyclopentadienyl)-zirkoniumdichlorid,
Bis(ethylcyclopentadienyl)-zirkoniumdichlorid,
Bis(n-butylcyclopentadienyl) -zirkoniumdichlorid und
Bis(trimethylsilylcyclopentadienyl)-zirkoniumdichlorid
sowie die entsprechenden Dimethylzirkoniumverbindungen.

Von den Verbindungen der Formel M-IIc sind diejenigen besonders geeignet, in denen
- R¹ und R⁹: gleich sind und für Wasserstoff oder C₁- bis C₁₀-Alkylgruppen stehen,
- R⁵ und R¹³: gleich sind und für Wasserstoff, eine Methyl-, Ethyl-, iso-Propyl- oder tert.-Butylgruppe stehen,
- R², R³, R¹⁰ und R¹¹: die Bedeutung
R³ und R¹¹ C₁- bis C₄-Alkyl
R² und R¹⁰ Wasserstoff
haben oder zwei benachbarte Reste R² und R³ sowie
R¹⁰ und R¹¹ gemeinsam für 4 bis 12 C-Atome aufweisende cyclische Gruppen stehen,
- R¹⁵: für 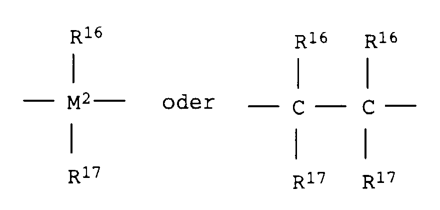 steht,
- M: für Titan, Zirkonium oder Hafnium und
- M²: für Silicium
- X: für Chlor, C₁- bis C₄-Alkyl oder Phenyl stehen.

Von besonderer Bedeutung sind solche Verbindungen der Formel M-IIc, die in 4-Stellung eine C₆-C₂₀-Arylgruppe und in 2-Stellung eine C₁-C₄-Alkylgruppe tragen. Beispielhaft für solche Verbindungen der Formel M-IIc ist Dimethylsilandiyl-bis(2-methyl-4-phenylindenyl)zirkoniumdichlorid.

Für den Substitutionsort gilt dabei die folgende Nomenklatur:

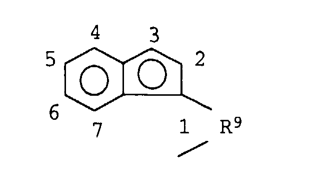

Beispiele für besonders geeignete Komplexverbindungen M-IIc sind
Dimethylsilandiylbis(indenyl)zirkoniumdichlorid
Dimethylsilandiylbis (4-naphthyl-indenyl)zirkoniumdichlorid
Dimethylsilandiylbis(2-methyl-benzo-indenyl) zirkoniumdichlorid
Dimethylsilandiylbis (2-methyl-indenyl)zirkoniumdichlorid
Dimethylsilandiylbis (2-methyl-4-(1-naphthyl) -indenyl)zirkonium-dichlorid
Dimethylsilandiylbis (2-methyl-4- (2-naphthyl) indenyl) zirkonium-dichlorid
Dimethylsilandiylbis (2-methyl-4-phenyl-indenyl)zirkoniumdichlorid
Dimethylsilandiylbis (2-methyl-4-t-butyl-indenylzirkoniumdichlorid
Dimethylsilandiylbis (2-methyl-4-isopropyl-indenyl)zirkonium-dichlorid
Dimethylsilandiylbis (2-methyl-4-ethyl-indenyl) zirkoniumdichlorid
Dimethylsilandiylbis (2-methyl-4-a-acenaphth-indenyl) zirkonium-dichlorid
Dimethylsilandiylbis(2,4-dimethyl-indenyl)zirkoniumdichlorid
Dimethylsilandiylbis(2-ethyl-indenyl)zirkoniumdichlorid
Dimethylsilandiylbis(2-ethyl-4-ethyl-indenyl)zirkoniumdichlorid
Dimethylsilandiylbis(2-ethyl-4-phenyl-indenyl) zirkoniumdichlorid
Dimethylsilandiylbis (2-methyl-4, 5-benzo-indenyl) zirkonium-dichlorid
Dimethylsilandiylbis (2-methyl-4,6-diisopropyl-indenyl) zirkonium-dichlorid
Dimethylsilandiylbis(2-methyl-4,5-diisopropyl-indenyl)zirkonium-dichlorid
Dimethylsilandiylbis (2,4,6-trimethyl-indenyl)zirkoniumdichlorid
Dimethylsilandiylbis (2,5,6-trimethyl-indenyl) zirkoniumdichlorid
Dimethylsilandiylbis (2,4,7-trimethyl-indenyl)zirkoniumdichlorid
Dimethylsilandiylbis (2-methyl-5-isobutyl-indenyl)zirkonium-dichlorid
Dimethylsilandiylbis (2-methyl-5-t-butyl-indenyl)zirkonium-dichlorid
Dimethylsilandiylbis (2-methyl-4-phenanthrylinden)zirkonium-dichlorid
Dimethylsilandiylbis (2-ethyl-4-phenanthylindenyl)zirkonium-dichlorid
Methyl (phenyl) silandiylbis (2-methyl-4-phenyl-indenyl)zirkonium-dichlorid
Methyl (phenyl) silandiylbis (2-methyl-4,6-diisopropyl-indenyl) - zirkoniumdichlorid
Methyl(phenyl) silandiylbis (2-methyl-4-isopropyl-indenyl)-zirkoniumdichlorid
Methyl (phenyl) silandiylbis (2-methyl-4, 5-benzo-indenyl)zirkonium-dichlorid
Methyl(phenyl) silandiylbis (2-methyl-4, 5- (methylbenzo)-indenyl)-zirkoniumdichlorid
Methyl (phenyl) silandiylbis (2-methyl-4, 5- (tetramethylbenzo) - indenyl) zirkoniumdichlorid
Methyl (phenyl) silandiylbis (2-methyl-4-a-acenaphth-indenyl) - zirkoniumdichlorid
Methyl(phenyl) silandiylbis (2-methyl-indenyl) zirkoniumdichlorid
Methyl(phenyl) silandiylbis (2-methyl-5-isobutyl-indenyl)zirkonium-dichlorid
Methyl(phenyl)silandiylbis(2-methyl-4-phenanthrylindenyl)-zirkoniumdichlorid
Methyl (phenyl) silandiylbis (2-ethyl-4-phenanthrylindenyl)-zirkoniumdichlorid
1, 2-Ethandiylbis (2-methyl-4-phenyl-indenyl)zirkoniumdichlorid
l,4-Butandiylbis(2-methyl-4-phenyl-indenyl)zirkoniumdichlorid
1, 2-Ethandiylbis (2-methyl-4, 6-diisopropyl-indenyl)zirkonium-dichlorid
1,4-Butandiylbis(2-methyl-4-isopropyl-indenyl) zirkoniumdichlorid
1,4-Butandiylbis (2-methyl-4, 5-benzo-indenyl) zirkoniumdichlorid
1,2-Ethandiylbis (2-methyl-4, 5-benzo-indenyl) zirkoniumdichlorid
1,2-Ethandiylbis (2,4,7-trimethyl-indenyl) zirkoniumdichlorid
1,2-Ethandiylbis (2-methyl-indenyl)zirkoniumdichlorid
1,4-Butandiylbis (2-methyl-indenyl) zirkoniumdichlorid
Dimethylsilandiyl (tert.-Butylamino) (tetramethylcyclopentadienyl)-zirkoniumdichlorid
[Tris(pentafluorophenyl) (cyclopentadienyliden)borato] (cyclopentadienyl)-1,2,3,4-tetraphenylbuta-1,3-dienylzirkonium
Dimethylsilandiyl- [tris(pentafluorophenyl) (2-methyl-4-phenylindenyliden) borato] (2-methyl-4-phenylindenyl)-1,2,3,4-tetraphenylbuta-1,3-dienylzirkonium
Dimethylsilandiyl- [tris(trifluoromethyl) (2-methylbenzindenyliden)borato] (2-methylbenzindenyl)-1,2,3,4-tetraphenylbuta-1,3-dienylzirkonium
Dimethylsilandiyl- [tris (pentafluorophethyl) (2-methyl-indenyliden)borato] (2-methyl-indenyl)-1,2,3,4-tetraphenylbuta-1,3-dienylzirkonium
Dimethylsilandiylbis(indenyl)zirkoniumdimethyl
Dimethylsilandiylbis(4-naphthyl-indenyl) zirkoniumdimethyl
Dimethylsilandiylbis(2-methyl-benzo-indenyl)zirkoniumdimethyl
Dimethylsilandiylbis(2-methyl-indenyl)zirkoniumdimethyl
Dimethylsilandiylbis (2-methyl-4- (1-naphthyl)-indenyl)zirkoniumdimethyl
Dimethylsilandiylbis (2-methyl-4- (2-naphthyl) -indenyl)zirkoniumdimethyl
Dimethylsilandiylbis (2-methyl-4-phenyl-indenyl)zirkoniumdimethyl
Dimethylsilandiylbis (2-methyl-4-t-butyl-indenyl) zirkoniumdimethyl
Dimethylsilandiylbis (2-methyl-4-isopropyl-indenyl) zirkoniumdimethyl
Dimethylsilandiylbis (2-methyl-4-ethyl-indenyl) zirkoniumdimethyl
Dimethylsilandiylbis (2-methyl-4-a-acenaphth-indenyl) zirkoniumdimethyl
Dimethylsilandiylbis(2,4-dimethyl-indenyl) zirkoniumdimethyl
Dimethylsilandiylbis (2-ethyl-indenyl)zirkoniumdimethyl
Dimethylsilandiylbis(2-ethyl-4-ethyl-indenyl)zirkoniumdimethyl
Dimethylsilandiylbis (2-ethyl-4-phenyl-indenyl) zirkoniumdimethyl
Dimethylsilandiylbis (2-methyl-4, 5-benzo-indenyl) zirkoniumdimethyl
Dimethylsilandiylbis (2-methyl-4,6-diisopropyl-indenyl)zirkoniumdimethyl
Dimethylsilandiylbis (2-methyl-4, 5-diisopropyl-indenyl) zirkoniumdimethyl
Dimethylsilandiylbis (2,4,6-trimethyl-indenyl)zirkoniumdimethyl
Dimethylsilandiylbis (2,5,6-trimethyl-indenyl)zirkoniumdimethyl
Dimethylsilandiylbis (2,4,7-trimethyl-indenyl)zirkoniumdimethyl
Dimethylsilandiylbis (2-methyl-5-isobutyl-indenyl)zirkoniumdimethyl
Dimethylsilandiylbis (2-methyl-5-t-butyl-indenyl) zirkoniumdimethyl
Dimethylsilandiylbis(2-methyl-4-phenanthrylindenyl)zirkoniumdimethyl
Dimethylsilandiylbis (2-ethyl-4-phenanthrylindenyl) zirkoniumdimethyl
Methyl (phenyl) silandiylbis (2-methyl-4-phenyl-indenyl)zirkoniumdimethyl
Methyl (phenyl)silandiylbis(2-methyl-4,6-diisopropyl-indenyl) zirkoniumdimethyl
Methyl (phenyl) silandiylbis (2-methyl-4-isopropyl-indenyl)zirkoniumdimethyl
Methyl (phenyl) silandiylbis (2-methyl-4, 5-benzo-indenyl)zirkoniumdimethyl
Methyl (phenyl) silandiylbis (2-methyl-4,5- (methylbenzo)-indenyl)zirkoniumdimethyl
Methyl (phenyl) silandiylbis (2-methyl-4, 5- (tetramethylbenzo)-indenyl)zirkoniumdimethyl
Methyl (phenyl) silandiylbis (2-methyl-4-a-acenaphthindenyl) zirkoniumdimethyl
Methyl (phenyl)silandiylbis(2-methyl-indenyl)zirkoniumdimethyl
Methyl (phenyl) silandiylbis (2-methyl-5-isobutyl-indenyl)zirkoniumdimethyl
Methyl (phenyl) silandiylbis (2-methyl-4-phenanthrylindenyl)zirkoniumdimethyl
Methyl (phenyl) silandiylbis (2-ethyl-4-phenanthrylindenyl)zirkoniumdimethyl
1,2-Ethandiylbis (2-methyl-4-phenyl-indenyl)zirkoniumdimethyl
l,2-Butandiylbis (2-methyl-4-phenyl-indenyl)zirkoniumdimethyl
l,2-Ethandiylbis (2-methyl-4,6-diisopropyl-indenyl) zirkoniumdimethyl
1,4-Butandiylbis (2-methyl-4-isopropyl-indenyl) zirkoniumdimethyl
1,4-Butandiylbis (2-methyl-4,5-benzo-indenyl) zirkoniumdimethyl
1,2-Ethandiylbis (2-methyl-4,5-benzo-indenyl) zirkoniumdimethyl
1,2-Ethandiylbis(2,4,7-trimethyl-indenyl)zirkoniumdimethyl
1,4-Butandiylbis (2-methyl-indenyl)zirkoniumdimethyl

Ganz besonders bevorzugt sind:
Dimethylsilandiylbis (2-methyl-indenyl) zirkoniumdichlorid
Dimethylsilandiylbis (2-methyl-4-isopropyl-indenyl) zirkoniumdichlorid
Dimethylsilandiylbis (2-methyl-4-(1-naphthyl)-indenyl)zirkonium-dichlorid
Dimethylsilandiylbis (2-methyl-4-phenyl-indenyl)zirkoniumdichlorid
Dimethylsilandiylbis (2-methyl-4- (para-t-butylphenyl)-indenyl)-zirkoniumdichlorid
Dimethylsilandiylbis (2-methyl-4-a-acenaphth-indenyl) zirkoniumdichlorid
Dimethylsilandiylbis(2-ethyl-4-phenyl-indenyl) zirkoniumdichlorid
Dimethylsilandiylbis (2-methyl-4, 5-benzo-indenyl) zirkoniumdichlorid
Dimethylsilandiylbis(2-methyl-4,6-diisopropyl-indenyl)zirkoniumdichlorid
Dimethylsilandiylbis (2-methyl-4-phenanthryl-indenyl) zirkoniumdichlorid
Dimethylsilandiylbis (2-ethyl-4-phenanthryl-indenyl)zirkoniumdichlorid
Methyl (phenyl)silandiylbis(2-methyl-4-phenanthryl-indenyl)-zirkoniumdichlorid
Methyl (phenyl) silandiylbis (2-ethyl-4-phenanthryl-indenyl)-zirkoniumdichlorid, Dimethylsilandiylbis-(-2-methyl-4-(para-4-butyl) -penylindenyl)zirkondichlorid, sowie die entsprechenden Dimethylzirkoniumverbindungen.

Bei den Verbindungen der allgemeinen Formel M-IId sind als besonders geeignet diejenigen zu nennen, in denen
- M: für Titan oder Zirkonium,
- X: für Chlor, C₁-bis C₄-Alkyl oder Phenyl stehen.
- R¹⁵: für 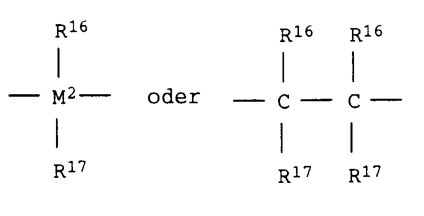 steht,
- A: für ― O ―, ― S ―, 〉NR¹⁹
und
- R¹ bis R³ und R⁵: für Wasserstoff, C₁- bis C₁₀-Alkyl, C₃- bis C₁₀-Cycloalkyl, C₆- bis C₁₅-Aryl oder Si(R⁸)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallkomplexe M-II eingesetzt werden.

Die kationenbildende Verbindung B) ist in der Regel eine starke Lewis-Säure (elektrisch neutral oder positiv geladen) oder eine Brönsted-Säure und/oder ein Aluminoxan der allgemeinen Formel V oder VI, wobei starke Lewis-Säuren (elektrisch neutral oder positiv geladen) oder Brönsted-Säuren bevorzugt sind, 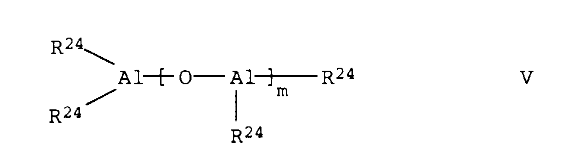 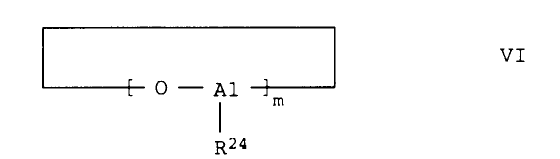 wobei
- R²⁴: eine C₁- bis C₄-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Weiterhin können Aryloxyalumoxane, wie in der US-A 5,391,793 beschrieben, Aminoaluminoxane, wie in der US-A 5,371,260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Es hat sich als vorteilhaft erwiesen, die Übergangsmetallverbindung A) und die oligomere Alumoxanverbindung in solchen Mengen zu verwenden, daß das atomare Verhältnis zwischen Aluminium aus der oligomeren Alumoxanverbindung und dem Übergangsmetall aus der Übergangsmetallverbindung A im Bereich von 1:1 bis 10⁶:1, vorzugsweise 1:1 bis 10⁴:1, insbesondere im Bereich von 1:1 bis 10:1, liegt.

Als neutrale Lewis-Säuren kommen vorzugsweise solche in Betracht, die nach der Umsetzung mit der Übergangsmetallkomponenete A) ein nicht-nucleophiles Anion bilden. Als positiv geladene Lewis-Säuren und als Brönsted-Säuren kommen vorzugsweise solche in Betracht, die ein nicht-nucleophiles konjugiertes Anion haben.

Starke, neutrale Lewissäuren als Komponente B) sind Verbindungen der allgemeinen Formel II

M³X¹X²X³ II

in der
- M³: ein Element der III. Hauptgruppe des Periodensystems bedeutet, insbesondere B, A1 oder Ga, vorzugsweise B,
- X¹, X² und X³: für Wasserstoff, C1- bis C10-Alkyl, C6- bis C15-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel II, in der X¹, X² und X³ gleich sind, wie Trifluorboran, Triphenylboran, Tris(4-fluorophenyl)boran, Tris (3,5-difluorophenyl)boran, Tris (4fluoromethylphenyl)boran, Tis (pentafluorophenyl)boran, Tris(tolyl)boran, Tris (3,5-dimethylphenyl)boran, Tris(3,5-dimethylfluorophenyl)boran und/oder Tris (3,4,5trifluorophenyl)boran. Insbesondere bevorzugt ist Tris(pentafluorophenyl)boran.

Ionische Verbindungen als Komponente B) mit starken lewissauren Kationen sind Verbindungen der allgemeinen Formel III

[(Y^{a+})Q₁Q₂...Q_{z}]^{d+} III

in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₃- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 und
- z: für ganze Zahlen von 0 bis 5 steht,
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat. Beispielhaft seien genannt Triphenylcarbeniumtetrakis (pentafluorophenyl)borat, Triphenylcarbeniumtetrakis(pentafluorophenyl)aluminat, Triphenylcarbeniumtetrakis (phenyl)aluminat, Ferroceniumtetrakis(pentafluorophenyl) - borat und/oder Ferroceniumtetrakis(pentafluorophenyl)aluminat.

Besonders bevorzugt als Komponente B) sind ionische Verbindungen mit Brönsted-Säuren als Kationen und vorzugsweise nicht koordinierenden Gegenionen, wie in der WO 91/09882 genannt; bevorzugtes Kation ist das N,N-Dimethylanilinium. Beispielhaft seien genannt Triethylammoniumtetra(phenyl)borat, Tributylammoniumtetra (phenyl)borat, Trimethylammoniumtetra (tolyl)borat, Tributylammoniumtetra (tolyl)borat, Tributylammoniumtetra (pentafluorophenyl)borat, Tributylammoniumtetra(pentafluorophenyl)aluminat, Tripropylammoniumtetra (dimethylphenyl)borat, Tributylammoniumtetra (trifluoromethylphenyl)borat, Tributylammoniumtetra (4-fluorophenyl)borat, N,N-Dimethylaniliniumtetra(phenyl)borat, N,N-Diethylaniliniumtetra(phenyl)borat, N,N-Dimethylaniliniumtetrakis(pentafluorophenyl)borate, N,N-Dimethylaniliniumtetrakis (pentafluorophenyl)aluminat, Di(propyl)ammonium-tetrakis (pentafluorophenyl)borat, Di (cyclohexyl) ammonium-tetrakis (pentafluorophenyl)borat, Triphenylphosphoniumtetrakis(phenyl)borat, Triethylphosphoniumtetrakis (phenyl)borat, Diphenylphosphoniumtetrakis(phenyl)borat, Tri(methylphenyl)phosphoniumtetrakis (phenyl)borat, Tri (dimethylphenyl)phosphoniumtetrakis(phenyl)borat.

Als Komponente B) sind ebenfalls Boran- oder Carboranverbindungen wie 7,8-Dicarbaundecaboran(13), Undecahydrid-7,8-dimethyl-7, 8-dicarbaundecaboran, Dodecahydrid-1-phenyl-1,3-dicarbaundecaboran, Tri (butyl) ammoniumdecahydrid-8-ethyl-7,9-dicarbaundecaborat, 4-Carbananaboran (14) Bis (tri (butyl)ammonium)nonaborat, Bis(tri(butyl)ammonium)undecaborat, Bis(tri (butyl)ammonium)dodecaborat, Bis (tri (butyl) ammonium) decachlorodecaborat, Tri (butyl) ammonium-1-carbadecaborate, Tri(butyl)ammonium-1-carbadodecaborate, Tri(butyl) ammonium-1-trimethylsilyl-1-carbadecaborate, Tri(butyl)ammoniumbis(nonahydrid-1,3-dicarbonnonaborat) cobaltat (III), Tri(butyl)ammoniumbis(undecahydrid-7,8-dicarbaundecaborat) ferrat (III) geeignet.

Selbstverständlich sind auch Gemische der bisher oben beschriebenen Verbindungen (starke neutrale und ionische Lewissäuren und Borane sowie Carborane) oder eines Teils dieser Verbindungen als Komponente B) geeignet, wobei das Mischungsverhältnis nicht kritisch ist.

Das molare Verhältnis Übergangsmetallverbindung A): kationenbildende Verbindung B) außer Aluminoxane beträgt 1 : 1 bis 1 : 10, vorzugsweise 1 : 1 bis 1 : 5.

Das erfindungsgemäße Katalysatorsystem kann als Komponente C) gegebenenfalls noch eine Organometallverbindung, vorzugsweise eine Metallverbindung der allgemeinen Formel IV

M¹ (R²¹)ᵣ (R²²)ₛ (R²³)ₜ IV

in der
- M¹: ein Alkali-, ein Erdalkalimetall oder ein Metall der III. Hauptgruppe des Periodensystems, d.h. Bor, Aluminium, Gallium, Indium oder Thallium bedeutet,
- R²¹: Wasserstoff, C₁- bis C₁₀-Alkyl, C₆- bis C₁₅-Aryl, Alkylaryl oder Arylalkyl mit jeweils 1 bis 10 C-Atom im Alkylrest und 6 bis 20 C-Atomen im Arylrest,
- R²² und R²³: Wasserstoff, Halogen, C₁- bis C₁₀-Alkyl, C₆- bis C₁₅-Aryl, Alkylaryl, Arylalkyl oder Alkoxy mit jeweils 1 bis 10 C-Atomen im Alkylrest und 6 bis 20 C-Atomen im Arylrest,
- r: eine ganze Zahl von 1 bis 3
und
- s und t: ganze Zahlen von 0 bis 2 bedeuten, wobei die Summe r+s+t der Wertigkeit von M¹ entspricht,
enthalten.

Liegt die Komponente C) zusammen mit A) und/oder B) vor, so ist sie für diesen Fall nicht identisch mit den Komponenten A) und insbesondere B).

Von den Metallverbindungen der allgemeinen Formel IV sind diejenigen bevorzugt, in denen
- M¹: Lithium, Magnesium oder Aluminium bedeutet und
- R²¹ bis R²³: für C₁- bis C₁₀-Alkyl stehen.

Besonders bevorzugte Metallverbindungen der Formel IV sind n-Butyl-Lithium, n-Butyl-n-octyl-Magnesium, n-Butyl-n-heptyl-Magnesium, Tri-n-hexyl-aluminium, Tri-iso-butyl-aluminium, Triethylaluminium und Trimethylaluminium.

Wenn die Verbindungen IV eingesetzt werden, sind sie bevorzugt in einer Menge von 800:1 bis 1:1, insbesondere 500:1 bis 50:1 (molares Verhältnis von M¹ aus IV zu Übergangsmetall M aus I) im Katalysatorsystem enthalten.

Als weitere Komponente C) kann das Katalysatorsystem noch Emulgatoren und/oder Schutzkolloide enthalten.

Als Emulgatoren kommen bevorzugt nichtionische Emulgatoren, z.B. Emulan® 825 PO, Emulan® NP 20, Emulan® NP 50, Emulan® OG, Emulan® OP 25, Emulan® OU, Emulan® TO 30, Lutensol® AT 18, Lutensol® RO 89, Pluriol® E 1000, Pluriol® P 2000, Pluronic® PE 4300, Pluronic® PE 6800, Pluronic® PE 8100 und Siligen® FA und kationische Emulgatoren, z.B. Dodecyltrimethylammoniumchlorid, Basacrylsalz AN und Basacrylsalz KM sowie Cethyltrimethylammoniumbromid und Benzethoniumchlorid zum Einsatz. Schutzkolloide sind bevorzugt nichtionisch oder kationisch, besonders bevorzugt auf Basis von Polyvinylalkohol, z.B. Protectol KLC 50.

Das erfindungsgemäße Verfahren wird zur Polymerisation von cyclischen oder nichtcyclischen Monomeren mit C-C-Doppelbindung oder C-C-Dreifachbindung eingesetzt. Dabei kann die C-C-Doppelbindung oder die C-C-Dreifachbindung oder beide sowohl terminal als auch innenständig, sowohl exocyclisch als auch endocyclisch angeordnet sein. Bevorzugte Monomere mit C-C-Dreifachbindung sind C₂- bis C₁₀-Alk-1-ine, wie Ethin, Propin, 1-Butin, 1-Hexin und weiterhin Phenylacetylen. Bevorzugt wird das erfindungsgemäße Polymerisationsverfahren zur Polymerisation oder Copolymerisation von C₂- bis C₁₂-Alk-1-enen oder C₄- bis C₁₀-Dienen, wie 1,3-Butadien, 1,5-Hexadien oder C₅- bis C₁₀-cyclischen Dienen wie Norbornadien, Cyclopentadien eingesetzt. Als C₂- bis C₁₂-Alk-1-ene sind Ethylen, Propylen, But-1-en, Pent-1-en, 4-Methyl-pent-1-en, Hex-1-en, Hept-1-en oder Oct-1-en sowie vinylaromatische Monomere wie Styrol, p-Methylstyrol oder 2,4-Dimethylstyrol oder Gemische aus diesen C₂- bis C₁₂-Alk-1-enen bevorzugt. Besonders bevorzugt sind Homo- oder Copolymerisate des Ethylens oder des Propylens, wobei der Anteil an Ethylen oder an Propylen in den Copolymerisaten mindestens 50 Mol-% beträgt. Bei den Copolymerisaten des Ethylens sind diejenigen bevorzugt, die als weitere Monomere Propylen, But-1-en, Hex-1-en oder Oct-1-en oder deren Mischungen enthalten. Bei den Copolymerisaten des Propylens handelt es sich insbesondere um solche Copolymerisate, die als weitere Monomere Ethylen oder But-1-en oder deren Mischungen enthalten.

Vorzugsweise werden mit dem erfindungsgemäßen Polymerisationsverfahren solche Polymerisate hergestellt, die
50 bis 100 Mol-% Ethylen und
0 bis 50 Mol-%, insbesondere 0 bis 30 Mol-% C₃- bis C₁₂-Alk-1-ene
enthalten.

Bevorzugt sind auch solche Polymerisate, die
50 bis 100 Mol-% Propylen,
0 bis 50 Mol-%, insbesondere 0 bis 30 Mol-% Ethylen und
0 bis 20 Mol-%, insbesondere 0 bis 10 Mol-% C₄- bis C₁₂-Alk-1-ene
aufweisen.

Die Summe der Mol-% ergibt stets 100.

Weiterhin sind besonders bevorzugt Polymerisate von vinylaromatischen Verbindungen der allgemeinen Formel V-I 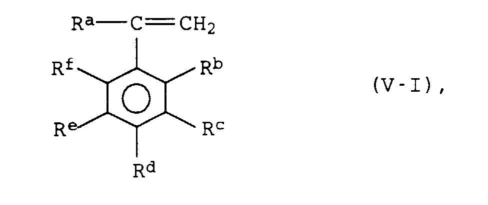 in der die Substituenten folgende Bedeutung haben:
- R^{a}: Wasserstoff oder C₁- bis C₄-Alkyl,
- R^{b} bis R^{f}: unabhängig voneinander Wasserstoff, C₁- bis C₁₂-Alkyl, C₆- bis C₁₈-Aryl, Halogen oder wobei zwei benachbarte Reste gemeinsam für 4 bis 15 C-Atome aufweisende cyclische Gruppen, beispielsweise C₄-C₈-Cycloalkyl oder anellierte Ringsysteme stehen.

Bevorzugt werden vinylaromatische Verbindungen der Formel V-I eingesetzt, in denen

R^{a} Wasserstoff bedeutet.

Als Substituenten R^{b} bis R^{f} kommen insbesondere Wasserstoff, C₁- bis C₄-Alkyl, Chlor oder Phenyl, Biphenyl, Naphthalin oder Anthracen in Betracht. Zwei benachbarte Reste können auch gemeinsam für 4 bis 12 C-Atome aufweisende cyclische Gruppen stehen, so daß sich als Verbindungen der allgemeinen Formel V-I beispielsweise Naphthalinderivate oder Anthracenderivate ergeben.

Beispiele für solche bevorzugten Verbindungen sind:
Styrol, p-Methylstyrol, p-Chlorstyrol, 2,4-Dimethylstyrol, 4-Vinylbiphenyl, 2-Vinylnaphthalin oder 9-Vinylanthracen.

Es können auch Mischungen verschiedener vinylaromatischer Verbindungen eingesetzt werden, wobei eine Komponente auch weitere Kohlenwasserstoffreste wie Vinylgruppen, Allylgruppen, Methallylgruppen, Butenyl- oder Pentenylgruppen, vorzugsweise Vinylgruppen am Phenylring tragen kann. Vorzugsweise wird jedoch nur eine vinylaromatische Verbindung verwendet.

Besonders bevorzugt vinylaromatische Verbindungen sind Styrol und p-Methylstyrol.

Die Vinylaromatischen Verbindungen der Formel V-I, vorzugsweise Styrol, können auch mit C₂- bis C₁₂-Alk-1-enen und/oder C₂- bis C₁₀-Alk-1-inen copolymerisiert werden.

Ganz besonders bevorzugte vinylaromatische Polymere sind syndiotaktisches Homo-Polystyrol (≥70 %, rr-Triaden, bestimmt mit ¹³C-NMR-Spektroskopie) oder Styrol-/C₂- bis C₁₂-Alk-1-en-Copolymere mit syndiotaktischen Styroleinheiten, wobei vorzugsweise Ethylen und/oder Propylen und/oder 1-Buten als Alk-1-en Comonomere verwendet werden.

Die Polymerisation der erfindungsgemäßen und oben beschriebenen Monomeren findet üblicherweise in einer wasserhaltigen, flüssigen Polymerisationsmischung statt. Darunter versteht man die Mischung aus Wasser, Monomer, Katalysatorsystem, gegebenenfalls organischen Lösungs- oder Suspensionsmittel oder weiteren Zusätzen beispielsweise jenen der Komponente C).

Der Wassergehalt der Polymerisationsmischung ist mindestens 30 Gew.-%, vorzugsweise 35 bis 90 und insbesondere 40 bis 70 Gew.-%, bezogen auf die Polymerisationsmischung.

Die Polymerisation kann in den für die Olefin-Polymerisation üblichen Verfahren in flüssiger Phase, wie Lösungs- oder Suspensionsverfahren, kontinuierlich oder auch diskontinuierlich durchgeführt werden.

Als organische Lösungs- oder Suspensionsmittel sind aliphatische, cycloaliphatische oder aromatische Kohlenwasserstoffe, die auch halogeniert sein können, ferner Ether, Ester und Ketone geeignet.

Gut geeignete organische Lösungsmittel sind C₆- bis C₂₀-Aromaten, wie Toluol, Ethylbenzol, meta-, ortho- oder para-Xylol, C₅- bis C₁₀-Aliphaten, wie n-Pentan- n-Hexan, n-Heptan, C₃- bis C₂₀-Ketone wie Aceton, Ethylmethylketon, Diethylketon, C₃- bis C₂₀-Ester, wie Ethylacetat, oder C₁- bis C₁₀-Halogenalkane, wie Methylenchlorid, 1,1,1-Trichlorethan.

Bevorzugtes organisches Lösungsmittel ist Toluol.

Die organischen Lösungsmittel können auch als Gemisch eingesetzt werden. Der Gehalt der genannten organischen Lösungsmittel in der Polymerisationsmischung beträgt in der Regel 0 bis 70 Gew.-% und vorzugsweise 0 bis 50 Gew.-%, bezogen auf die Polymerisationsmischung.

Gut geeignete Polymerisationsverfahren sind folgende:

Eine Mischung aus Polymerisationskatalysator - also M-II und gegebenenfalls B) und/oder C) - und Monomer und gegebenenfalls organischem Lösemittel (im folgenden Mischung Nr. 1 genannt) wird zu einer Mischung aus Wasser, Emulgator und/oder Schutzkolloid (im folgenden Mischung Nr. 2 genannt) hinzugegeben.

Vorzugsweise wird die Mischung Nr. 1 0,1 bis 10 min sich selbst bei einer Temperatur von 60 bis 100°C überlassen, bevor man sie zu der wässrigen Mischung Nr. 2, vorzugsweise unter Rühren, hinzufügt.

Die Zugabe der Mischung Nr. 1 zur Mischung Nr. 2 erfolgt üblicherweise bei 20 bis 150°C, bevorzugt bis 150°C, besonders bevorzugt 80 bis 150°C, die Polymerisation selbst im allgemeinen bei 20 bis 100°C, bevorzugt 60 bis 100°C, besonders bevorzugt 80 bis 100°C. Die Zugabe der Mischung Nr. 1 zu der Mischung Nr. 2 erfolgt vorzugsweise so schnell, daß eine evtl. Kristallisation nicht auftreten kann, die die Bildung einer Emulsion stören oder verhindern könnte. Die Emulsionsbildung kann auch durch einen Hochdruckhomogenisator oder Ultraschall unterstützt werden, um besonders feine Tröpfchen zu bekommen. Dies kann in der Mischung Nr. 2 vor während oder nach Zugabe der Mischung Nr. 1 geschehen. Die Art der Polymerisationsvariante ist unkritisch, es können Suspensionspolymerisationen, Emulsionspolymerisationen einschließlich Miniemulsionspolymerisationen und Mikroemulsionspolymerisationen durchgeführt werden, wobei die Emulsionspolymerisation bevorzugt ist.

Nach dem erfindungsgemäßen Verfahren werden zunächst wässrige Polymerdispersionen oder Polymersuspensionen erhalten.

Die Teilchengröße der Polymere in diesen Dispersionen liegen im Bereich von 10 bis 1000 nm, vorzugsweise 50 bis 500 nm, insbesondere 100 bis 300 nm.

Die Teilchengröße in diesen Suspensionen liegen im Bereich von 50 bis 1000 µm.

Aus den zunächst erhaltenen wässrigen Dispersionen/Suspensionen lassen sich durch Entfernen des Wassers und gegebenenfalls des organischen Lösungsmittels die Polymerpartikel als solche erhalten. Für die Entfernung der flüssigen Komponenten aus der Dispersion/Suspension sind alle gängigen Verfahren geeignet, vorzugsweise Filtrieren, Sprühtrocknen oder Verdampfen der Flüssigkeiten.

Die so erhältlichen Polymere haben gute Morphologie und eine hohe Schüttdichte.

Die erfindungsgemäßen Dispersionen lassen sich in zahlreichen Anwendungen vorteilhaft verwenden, wie beispielsweise Papieranwendungen wie Papierstreicherei oder Oberflächenleimung, weiterhin Anstriche und Lacken, Bauchemikalien, Klebrohstoffe, Formschäume, Textil- und Lederapplikationen, Teppichrückenbeschichtungen, Matratzen oder pharmazeutischen Zubereitungen.

Unter Papierstreicherei versteht man das Beschichten der Papieroberfläche mit wässrigen pigmentierten Dispersionen. Dabei sind die erfindungsgemäßen Dispersionen aufgrund ihres günstigen Preises vorteilhaft. Unter Oberflächenleimung versteht man das pigmentfreie Auftragen von hydrophobierenden Substanzen. Dabei sind gerade die bisher unter wirtschaftlichen Bedingungen nur schwer zugänglichen Polyolefindispersionen als besonders hydrophobe Substanz von Vorteil. Weiterhin ist von Vorteil, dass während der Herstellung der erfindungsgemäßen Dispersionen für Papierstreicherei oder Oberflächenleimung keine Molmassenregler wie beispielsweise tert.-Dodecylmercaptan zugegeben werde müssen, die einerseits schlecht abgetrennt werden können, andererseits aber unangenehm riechen.

In Anstrichen und Lacken sind die erfindungsgemäßen Dispersionen besonders geeignet, weil sie preislich sehr günstig sind. Besonders vorteilhaft sind wässrige Polyethylendispersionen, weil sie weiterhin auch eine besondere UV-Stabilität aufweisen. Weiterhin sind wässrige Polyethylendispersionen besonders geeignet, weil sie gegenüber basischen Materialien wie beispielsweise Zement, die in der Bauchemie üblich sind, beständig sind.

In Klebstoffen, insbesondere in Klebstoffen für selbstklebende Etiketten oder Folien sowie Pflastern, aber auch in Bauklebstoffen oder Industrieklebstoffen, haben die erfindungsgemäßen Dispersionen wirtschaftliche Vorteile. Insbesondere in Bauklebstoffen sind sie besonders günstig, weil sie gegenüber basischen Materialien, die in der Bauchemie üblich sind, beständig sind.

In Formschäumen, die aus den erfindungsgemäßen Dispersionen durch an sich bekannte Verfahren wie das Dunlop-Verfahren oder das Talalay-Verfahren hergestellt werden, ist wiederum der günstige Preis der erfindungsgemäßen Dispersionen vorteilhaft. Als weitere Komponenten dienen Geliermittel, Seifen, Verdicker und Vulkanisationspasten. Formschäume werden beispielsweise zu Matratzen verarbeitet.

Textil- und Lederapplikationen dienen zur Haltbarmachung und Veredlung von Textil oder Leder. Unter den Effekten sind die Imprägnierung sowie die weitere Ausrüstung der Textilien beispielhaft zu nennen. Vorteilhaft an den erfindungsgemäßen Dispersionen als Bestandteil in Textil- und Lederapplikationen ist neben dem günstigen Preis die Geruchsfreiheit, da sich Olefine als Restmonomere leicht entfernen lassen.

Teppichrückenbeschichtungen dienen zum Verkleben der Teppichfasern auf dem Rücken, weiterhin haben sie die Aufgabe, dem Teppich die nötige Steifigkeit zu geben sowie Additive wie beispielsweise Flammschutzmittel oder Antistatika gleichmäßig zu verteilen. Vorteilhaft an den erfindungsgemäßen Dispersionen ist neben dem günstigen Preis die Unempfindlichkeit gegenüber den gängigen Additiven. Insbesondere die erfindungsgemäßen Polyethylendispersionen haben sich als chemisch besonders inert erwiesen. Weiterhin ist von Vorteil, dass während der Herstellung der erfindungsgemäßen Dispersionen für Teppichrückenbeschichtungen keine Molmassenregler wie beispielsweise tert.-Dodecylmercaptan zugegeben werden müssen, die einerseits schlecht abgetrennt werden können, andererseits aber unangenehm riechen. Schließlich lassen sich Teppiche, enthaltend die erfindungsgemäßen Teppichrückenbeschichtungen, gut recyclen.

Unter pharmazeutischen Zubereitungen werden Dispersionen als Träger von Medikamenten verstanden. Dispersionen als Träger von Medikamenten sind an sich bekannt. Vorteilhaft an den erfindungsgemäßen Dispersionen als Träger von Medikamenten ist der wirtschaftlich günstige Preis und die Beständigkeit gegen Körpereinflüsse wie Magensaft oder Enzyme.

### Beispiele

Die Teilchengröße der Suspensionspartikel wurden mit dem Raster-Elektronen-Mikroskop gemessen. Der mittlere Partikeldurchmesser wurde unter Zuhilfenahme eines Bildanalysators über die objekt-spezifische Fläche und Bestimmung des Durchmessers des flächenäquivalenten Kreises bestimmt.

Die Teilchengröße der Dispersion wurde mit Lichtstreuung gemessen. Dazu gibt es definitiv keine Norm, eine Beschreibung findet man z.B. in D. Distler (Herausgeber), "Wäßrige Polymerdispersion", Wiley-VCH, Weinheim, 1999, Kapitel 4. Das eingesetzte Gerät ist ein Malvern Autosizer IIC automatisiert mit Durchflußküvette und Gilson-Autosampler. Die Messbedingungen sind Messtemperatur 23,0°C, Messzeit 200 Sekunden (10 Zyklen von 20 s), Streuwinkel 90° und Wellenlänge der Laser 633 nm (HeNe).

Das eingesetzte NMR-Gerät ist ein Bruker DPX 250 (Lösungsmittel CD₂Cl₄ bei 120°C).

Die DSC Kurven wurden mit einem Seiko Instruments DSC 6200 R gemessen. Die Einwaage betrug ca. 8 mg, die Heizrate war 20 K/min. Die Probe wurde im Anlieferungszustand gemessen (1. Lauf) sowie nach schneller Abkühlung von 300°C (2. Lauf). Die Glastemperatur wurde als midpoint Glastemperatur ausgewertet. Die DSC-Messungen erfolgten in Anlehnung an DIN 53765.

### Beispiel 1

### Polymerisation von Styrol in Gegenwart von Wasser

Im Zulaufgefäß wurden 75 g Styrol in 300 g Toluol gelöst und auf 80°C geheizt. Danach wurden 9,5 g 25 % Triisobutylaluminium (TiBA) in Toluol zugegeben. Separat wurden 0,385 g N,N-Dimethylaniliniumtetrakis(pentafluorphenyl)borat und 0,135 g Pentamethylcyclopentadienyltitaniumtrimethoxyd in 10 mL Toluol gelöst. Diese Mischung wurde erst nach der TiBa Zugabe im Zulaufgefäß zudosiert. Nach 0,5 Minuten wurde dieses Gemisch zu einer Emulsion von 18,75 g 20 % Lutensol AT 18 in 300 g deionisiertem Wasser zugegeben. Nach einer Stunde wurde die Reaktion mit Ethanol abgebrochen. Die Suspension wurde bei 80°C unter Vakuum getrocknet.
Ausbeute: 66 %
Schmelzpunkt: 269°C
Teilchengröße: 500 µm

### Beispiel 2

### Polymerisation in Gegenwart von Wasser

Im Reaktor wurden 20 g Styrol in 77 g Toluol gelöst und auf 80°C geheizt. Danach wurden 2,5 g 25 % Triisobutylaluminium (TiBA) in Toluol zugegeben. Separat wurden 0,1 g N,N-dimethylaniliniumtetrakis(pentafluorphenyl)borat und 0,035 g Pentamethylcyclopentai dienyltitaniumtrimethoxyd in 10 ml Toluol gelöst. Diese Mischung wurde erst nach der TiBA Zugabe im Reaktor zudosiert. Nach 5 Minuten wurde ein auf 80°C geheiztes Gemisch von 96,5 g Cetyltrimethylammoniumbromid in 1286 g Wasser zugegeben. Nach einer Stunde wurde die Reaktion mit Ethanol abgebrochen. Es wurde eine Dispersion erhalten mit einer mittleren Teilchengröße von 70 nm. Es wurde ein Umsatz von 62 % bestimmt.

## Patentansprüche

1. Verfahren zur Herstellung von Polymeren, welchen Monomere mit C-C-Doppelbindung und/oder C-C-Dreifachbindung zugrunde liegen, durch Polymerisation dieser Monomeren in Gegenwart eines Katalysatorsystems enthaltend als aktive Bestandteile
A) eine eine Übergangsmetallverbindung eines frühen Übergangsmetalls (M-II) 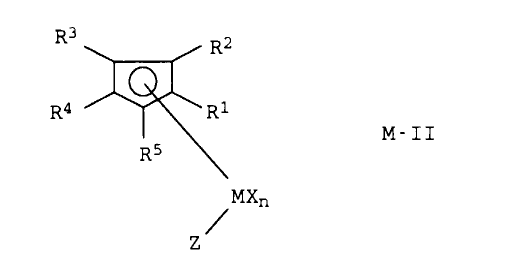 in der die Substituenten folgende Bedeutung haben:
M Titan, Zirkonium, Hafnium, Vanadium, Niob oder Tantal, sowie Elemente der III. Nebengruppe des Periodensystems und der Lanthanoiden,
X Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁶ oder -NR⁶R⁷, N(CH₂CH₂O)₃,
n eine ganze Zahl zwischen 1 und 3, wobei n der Wertigkeit von M minus der Zahl 2 entspricht,
wobei
R⁶ und R⁷ Wasserstoff, C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
R¹ bis R⁵ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder Si(R⁸)₃ mit
R⁸ C₁- bis C₁₀-Alkyl, C₃- bis C₁₀-Cycloalkyl oder C₆ - bis C₁₅-Aryl,
Z für X oder 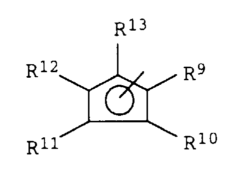 steht,
wobei die Reste
R⁹ bis R¹³ Wasserstoff, C₁- bis C₁₀-Alkyl, 5- bis 7gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁴)₃ mit
R¹⁴ C₁- bis C₁₀-Alkyl, C₆- bis C₁₅-Aryl oder C₃- bis C₁₀-Cycloalkyl,
oder wobei die Reste R⁴ und Z gemeinsam eine Gruppierung - R¹⁵-A- bilden, in der
R¹⁵ 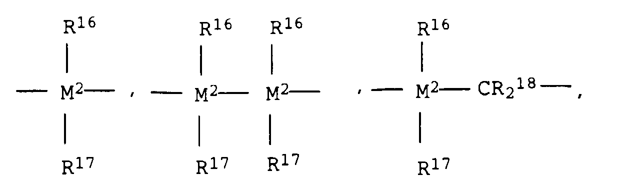 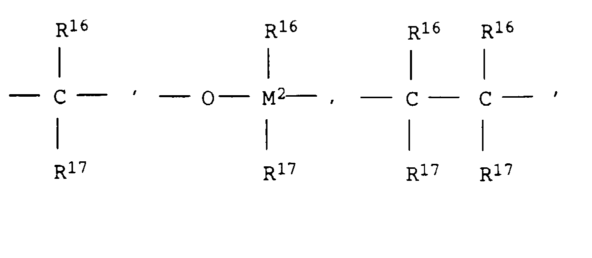 = BR¹⁶, = AlR¹⁶, -Ge-, -Sn-, -O-, -S-, = SO, = SO₂, = NR¹⁶, = CO, = PR¹⁶ oder = P(O)R¹⁶ ist,
wobei
R¹⁶, R¹⁷ und R¹⁸ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
M² Silicium, Germanium oder Zinn ist,
A ― O ―, ― S ―, 〉NR¹⁹ oder 〉PR¹⁹ bedeuten, mit
R¹⁹ C₁- bis C₁₀-Alkyl, C₆- bis C₁₅-Aryl, C₃- bis C₁₀-Cycloalkyl, Alkylaryl oder Si(R²⁰)₃,
R²⁰ Wasserstoff, C₁- bis C₁₀-Alkyl, C₆- bis C₁₅-Aryl, das seinerseits mit C₁- bis C4-Alkylgruppen substituiert sein kann oder C₃- bis C₁₀-Cycloalkyl
oder wobei die Reste R⁴ und R¹² gemeinsam eine Gruppierung -R¹⁵- bilden und gegebenenfalls eine kationenbildende Verbindung B) und gegebenenfalls weitere Komponenten C),
dadurch gekennzeichnet, daß die Polymerisationsmischung mindestens 30 Gew.-% wasser enthält.

2. Verfahren nach Anspruch 1, wobei man die Übergangsmetallverbindung M-II zunächst mit der kationenbildenden Verbindung B) und danach mit den anderen Reaktionskomponenten mischt.

3. Verfahren nach den Ansprüchen 1 bis 2, wobei man die Übergangsmetallverbindung M-II zunächst mit der kationenbildenden Verbindung B) mischt, diese Mischung zu einer Mischung aus dem oder den Monomeren und gegebenenfalls weiteren Komponente(n) C) zugibt und die so erhaltene Mischung - die praktisch kein Wasser enthält - nach 0,1 bis 10 Minuten zu einer flüssigen Phase zugibt, die mindestens 90 Gew.-% - bezogen auf diese flüssige Phase - Wasser und gegebenenfalls noch Emulgatoren und/oder Schutzkolloide als weitere Komponenten C) enthält.

4. Verfahren nach den Ansprüchen 1 bis 3, wobei man obligatorisch als weitere Komponente C) Emulgatoren und/oder Schutzkolloide verwendet.

5. Verfahren nach den Ansprüchen 1 bis 4, wobei die Emulgatoren und/oder Schutzkolloide neutral oder kationisch sind.

6. Verfahren nach den Ansprüchen 1 bis 5, wobei man als Monomere C₂- bis C₂₀-Alk-1-ene und/oder cyclische und/oder nicht-cyclische C₄- bis C₁₀-Diene und/oder C₈- bis C₂₀ vinylaromatische Verbindungen verwendet.

7. Wässrige Dispersionen oder Suspensionen, welchen Monomere mit C-C-Doppelbindung und/oder C-C-Dreifachbindung zugrunde liegen, erhältlich nach einem Verfahren gemäß den Verfahrensmerkmalen der Ansprüche 1 bis 6.

8. Wässrige Dispersionen oder Suspensionen nach Anspruch 7, wobei man als Monomere C₈- bis C₂₀ vinylaromatische Verbindungen verwendet.

9. Polymere erhältlich aus wässrigen Dispersionen oder Suspensionen nach den Ansprüchen 7 bis 8 durch Entfernung des Wassers aus diesen Dispersionen oder Suspensionen.

10. Verwendung der wässrigen Dispersionen oder Suspensionen gemäß Anspruch 7 bis 8 für Papieranwendungen wie Papierstreicherei oder Oberflächenleimung, Anstrichlacke, Klebrohstoffe, Formschäume wie beispielsweise Matratzen, Textil- und Lederapplikationen, Teppichrückenbeschichtungen oder pharmazeutischen Anwendungen.
